# EUROPÄISCHE PATENTSCHRIFT

(11) **EP 1 425 882 B1**
(45) Veröffentlichungstag und Bekanntmachung des Hinweises auf die Patenterteilung: **02.03.2005**
(21) Anmeldenummer: 02758108.1
(22) Anmeldetag: 20.07.2002
(51) Int. Cl.: H04L 12/40, B60R 16/02, H04B 3/54, H04B 3/56

(54) **VERFAHREN UND VERSORGUNGSLEITUNGSSTRUKTUR ZUR ÜBERTRAGUNG VON INFORMATIONEN ZWISCHEN ELEKTRISCHEN KRAFTFAHRZEUGKOMPONENTEN**
METHOD AND SUPPLY LINE STRUCTURE FOR TRANSMITTING DATA BETWEEN ELECTRICAL AUTOMOTIVE COMPONENTS
PROCEDE ET STRUCTURE DE LIGNES D'ALIMENTATION DESTINES A LA TRANSMISSION D'INFORMATIONS ENTRE DES PARTIES ELECTRIQUES D'UN VEHICULE

(30) Priorität: 31.08.2001 DE 10142408
(43) Veröffentlichungstag der Anmeldung: 09.06.2004
(73) Patentinhaber: ROBERT BOSCH GMBH, 70442 Stuttgart (DE)
(72) Erfinder: ENDERS, Thorsten, 75428 Illigen (DE); HUGEL, Robert, 76199 Karlsruhe (DE)
(86) Internationale Anmeldenummer: PCT/DE2002/002681
(87) Internationale Veröffentlichungsnummer: WO 2003/028305

(56) Entgegenhaltungen:
- EP-A- 1 085 674
- WO-A-92/21180
- DE-A- 19 906 095
- US-A- 5 539 388

## Beschreibung

Die vorliegende Erfindung betrifft ein Verfahren zur Übertragung von Informationen zwischen elektrischen Komponenten in einem Kraftfahrzeug. Die Informationen werden über einen Datenbus übertragen. Zumindest einige der Komponenten werden über eine Versorgungsleitungsstruktur mit Energie versorgt.

Die Erfindung betrifft außerdem ein Bussystem zur Übertragung von Informationen zwischen elektrischen Komponenten in einem Kraftfahrzeug. Das Bussystem umfasst einen Datenbus. Zumindest einige der Komponenten sind an eine in dem Kraftfahrzeug vorgesehene Versorgungsleitungsstruktur zur Energieversorgung der Komponenten angeschlossen.

Die vorliegende Erfindung betrifft des weiteren eine elektrische Komponente eines Kraftfahrzeugs, die Mittel zum Senden von Informationen an andere elektrische Komponenten über einen Datenbus und zum Empfangen von Informationen von anderen elektrischen Komponenten über den Datenbus aufweist. Die Komponente und zumindest einige der anderen Komponenten sind an eine Versorgungsleitungsstruktur zur Energieversorgung angeschlossen.

### Stand der Technik

In einem Kraftfahrzeug findet nach dem Stand der Technik die Kommunikation zwischen verschiedenen elektrischen Komponenten, wie bspw. Türsteuergerät und Sitzsteuergerät, in der Regel mittels eines Bussystems (z.B. Controller Area Network, CAN) statt. Darüber hinaus sind zur Zeit neue Buskonzepte in der Entwicklung, bei denen die Kommunikation zwischen den elektrischen Komponenten über eine Versorgungsleitungsstruktur folgen soll, die zur Energieversorgung der elektrischen Komponenten in dem Kraftfahrzeug vorgesehen ist. Dieses neue Buskonzept wird auch als Powerline Communications bezeichnet. Die Powerline Communications kann mit den heute in Kraftfahrzeugen vorhandenen Versorgungsleitungsstrukturen nur eingeschränkt betrieben werden, da die über die Versorgungsleitungsstruktur zu übertragenden Informationen auf Grund von Störungen und Reflexionen stark gedämpft bei der empfangenden Komponente ankommen bzw. sogar gar nicht mehr von Stör- oder Rauschsignalen unterschieden werden können.

Aus der WO 92/21180 ist eine Versorgungsleitungsstruktur für Powerline Communications bekannt. In dieser Druckschrift wird ganz allgemein die Funktionsweise einer Powerline Communications erläutert und werden Lösungen für verschiedene Probleme angesprochen, die bei der Realisierung einer Powerline Communications auftreten können. Auf diese Druckschrift wird hinsichtlich des Aufbaus einer Versorgungsleitungsstruktur für eine Powerline Communications und hinsichtlich der Funktionsweise einer Powerline Communications ausdrücklich Bezug genommen.

Darüber hinaus ist aus der DE 197 03 144 C2 ein Verfahren zur Übertragung von Informationen in einem Kraftfahrzeug über eine Versorgungsleitungsstruktur bekannt. Die dort beschriebene Powerline Communications ist auf den Einsatz für elektrische Komponenten einer Rückfahrhilfe eines Kraftfahrzeugs beschränkt. Für die Powerline Communications wird die in dem Kraftfahrzeug bereits vorhandene Versorgungsleitungsstruktur ohne besondere Veränderungen oder Anpassungen an die Powerline Communications verwendet.

Ebenso ist aus der EP 1 085 674 ein Verfahren zur Übertragung von Informationen zwischen elektrischen Komponenten in einem Fahrzeug bekannt, wobei die Informationen über einen Datenbus übertragen werden und zumindest einige der Komponenten über eine Versorgungsleitungsstrucktur mit Energie versorgt werden.

Die aus dem Stand der Technik bekannten Datenbusse arbeiten mehr oder weniger fehlertolerant. In Kraftfahrzeugen werden jedoch zunehmend sicherheitsrelevante Komponenten, bspw. X-by-wire-Anwendungen, bei denen eine Aufallsicherheit der Informationsübertragung über Datenbusse gewährleistet sein muss, eingesetzt. Um die geforderte Ausfallsicherheit zumindest annähernd zu erzielen, werden die Datenbusse zumindest in Teilbereichen redundant ausgebildet.

Die redundante Auslegung der Bussysteme mit mehreren Datenbussen führt jedoch zu erhöhten Materialkosten für den zusätzlichen Datenbus und zu einem erhöhten Arbeits- und Kostenaufwand für die Verlegung des zusätzlichen Datenbusses in dem Kraftfahrzeug.

Der vorliegenden Erfindung liegt die Aufgabe zugrunde, die Ausfallsicherheit eines Bussystems, insbesondere für den Einsatz in sicherheitsrelevanten Bereichen des Kraftfahrzeugs, mit möglichst geringem Kosten- und Arbeitsaufwand zu erhöhen.

Zur Lösung dieser Aufgabe schlägt die Erfindung ausgehend von dem Verfahren zur Informationsübertragung zwischen Kraftfahrzeugkomponenten der eingangs genannten Art vor, dass die Informationen außer über den Datenbus zumindest nach Ausfall des Datenbusses auch über die Versorgungsleitungsstruktur übertragen werden.

### Vorteile der Erfindung

Die vorliegende Erfindung geht davon aus, dass jede elektrische Komponente in einem Kraftfahrzeug, insbesondere von sicherheitsrelevanten Systemen, mit elektrischer Energie versorgt werden muss und die Versorgungsleitungen zur Verfügung stehen. Als elektrische Komponenten im Sinne der vorliegenden Erfindung werden insbesondere Kraftfahrzeugsteuergeräte, aber auch hydraulische oder pneumatische oder anderartige Komponenten bezeichnet, die elektrisch ansteuerbar sind. Insbesondere werden jedoch die Komponenten sicherheitsrelevanter Bereiche des Kraftfahrzeugs, bspw. der Motorsteuerung, des Triebstrangs oder des Bremssystems (sog. X-by-wire-Anwendungen), als elektrische Komponenten bezeichnet.

Die Übertragung von Informationen über die Versorgungsleitungsstruktur wird auch als "Powerline Communications" bezeichnet. Durch die zusätzliche Übertragung von Informationen außer über den Datenbus auch über die Versorgungsleitungsstruktur steht bei einem bereits vorhandenen Bussystem ein wenigstens teilweise redundanter Kanal zur Verfügung. Selbst wenn über die Versorgungsleitungsstruktur nicht das gesamte Kommunikationsnetz in dem Kraftfahrzeug redundant ausgelegt werden kann, so sind auf jeden Fall eine Notfunktion oder eine limp-home-Funktion über diesen Kanal ausführbar. Auf diese Weise kann ein Ausfall einer elektrischen Komponente aufgrund einer gestörten Informationsübertragung zu anderen Komponenten, bzw. sogar ein Totalausfall des gesamten Kraftfahrzeugs verhindert werden. Die Ausfallsicherheit des erfindungsgemäßen Bussystems ist deutlich größer als die des Datenbusses alleine betrachtet.

Der Datenbus ist als ein standardisiertes Bussystem, das zur Informationsübertragung bestimmt ist, ausgelegt. Wenn in dem Datenbus beispielsweise aufgrund von Leitungs- oder Transceiverdeffekten eine Informationsübertragung nicht mehr möglich ist, können zumindest die relevanten Informationen über die Versorgungsleitungsstruktur übertragen werden. Das erfindungsgemäße Bussystem wird insbesondere in sicherheitsrelevanten Bereichen, wie beispielsweise MotorCAN, Triebstrangsteuerung, Bremssystemsteuerungen oder anderen X-by-wire-Anwendungen, eingesetzt. Kern der vorliegenden Erfindung ist somit die Nutzung eines in dem Kraftfahrzeug sowieso vorhandenen Versorgungsnetzes als zweite physikalische Schicht für die Kommunikation zwischen den Komponenten in dem Kraftfahrzeug, also ein redundantes Bussystem mittels Powerline Communications.

Mit der vorliegenden Erfindung kann die Kommunikationsverbindung zwischen sicherheitsrelevanten Systemen abgesichert und die Ausfallsicherheit der Systeme erhöht werden. Zur Realisierung der redundanten Übertragungsstrecke müssen keine zusätzlichen Leitungen verlegt werden, wodurch der zusätzliche Aufwand und die zusätzlichen Kosten für die zweite Übertragungsstrecke auf ein Mininum reduziert werden. Die Versorgungsleitungsstruktur ist bereits sicherheitsrelevant, da die Kommunikation auf Versorgungsleitungen statffindet, die aus Gründen der Energieversorgung bei sicherheitsrelevanten Systemen nicht ausfallen darf.

Gemäß einer vorteilhaften Weiterbildung der vorliegenden Erfindung wird vorgeschlagen, dass die Informationen redundant über den Datenbus und über die Versorgungsleitungsstruktur übertragen werden. Bei der empfangenden Komponente stehen also die gleichen Informationen an, wobei die Informationen sowohl über den Datenbus als auch über die Versorgungsleitungsstruktur übertragen werden.

Gemäß einer bevorzugten Ausführungsform der vorliegenden Erfindung wird vorgeschlagen, dass die über die Versorgungsleitungsstruktur übertragenen Informationen bei einer funktioniernden Informationsübertragung über den Datenbus in einer empfangenden Komponente nicht ausgewertet werden. Erst bei einem Fehler in der Informationsübertragung über den Datenbus werden die über die Versorgungsleitungsstruktur übertragenen Informationen in der empfangenden Komponente ausgewertet.

Alternativ wird vorgeschlagen, dass die über die Versorgungsleitungsstruktur übertragenen Informationen in einer empfangenden Komponenten mit den über den Datenbus übertragenen Informationen verglichen werden. Die zusätzlich über die Versorgungsleitungsstruktur übertragenen Informationen werden also für eine Plausibilitätsprüfung herangezogen. Auf diese Weise können Übertragungsfehler erkannt und geeignete Maßnahmen getroffen werden, wie bspw. eine erneute Übertragung der Informationen oder einer Nichtberücksichtigung der übertragenen (möglicherweise fehlerhaften) Informationen.

Gemäß einer anderen vorteilhaften Weiterbildung der vorliegenden Erfindung wird vorgeschlagen, dass die Informationen bei einer funktionierenden Informationsübertragung über den Datenbus ausschließlich über den Datenbus übertragen werden und dass bei einer fehlerhaften Informationsübertragung über den Datenbus die Informationen über die Versorgungsleitungsstruktur übertragen werden. Gemäß dieser Weiterbildung wird die Versorgungsleitungsstruktur nur dann zur Übertragung von Informationen herangezogen, wenn die Informationsübertragung über den Datenbus nicht funktioniert. Bei einer funktionierenden Informationsübertragung kann die Versorgungsleitungsstruktur dann zur Übertragung anderer Informationen herangezogen werden.

Demgemäß wird vorgeschlagen, dass bei einer funktionerenden Informationsübertragung über den Datenbus andere Informationen über die Versorgungsleitungsstruktur übertragen werden. Diese von der Informationsübertragung über den Datenbus unabhängige Kommunikation auf der Versorgungsleitungsstruktur kann bei Bedarf unterbrochen werden, um bei einer fehlerhaften Informationsübertragung über den Datenbus die Informationen über die Versorgungsleitungsstruktur übertragen zu können. Alternativ kann die Kommunikation auf der Versorgungsleitungsstruktur auch fortgesetzt werden, wobei dann eine geringere Bandbreite für die Informationsübertragung über die Versorgungsleitungsstruktur als Ersatz der Übertragung über den Datenbus zur Verfügung steht. Diese Bandbreite kann jedoch ausreichend sein, um einen lebensnotwendigen Teil der Informationsübertragung des Datenbusses übernehmen zu können. Dadurch kann ein Notlaufbetrieb sichergestellt werden.

Als eine weitere Lösung der Aufgabe der vorliegenden Erfindung wird ausgehend von dem Bussystem zur Informationsübertragung zwischen elektrischen Kraftfahrzeugkomponenten der eingangs genannten Art vorgeschlagen, dass das Bussystem neben dem Datenbus auch die Versorgungsleitungsstruktur zur Übertragung von Informationen zumindest nach Ausfall des Datenbusses umfasst.

Gemäß einer vorteilhaften Weiterbildung der vorliegenden Erfindung wird vorgeschlagen, dass der Datenbus als ein Controller-Area-Network (CAN)-Bus ausgebildet ist.

Gemäß einer bevorzugten Ausführungsform der vorliegenden Erfindung wird vorgeschlagen, dass das Bussystem Mittel zur Ausführung des erfindungsgemäßen Verfahrens aufweist.

Schließlich wird als noch eine weitere Lösung der Aufgabe der vorliegenden Erfindung ausgehend von der elektrischen Kraftfahrzeugkomponente der eingangs genannten Art vorgeschlagen, dass die Komponente weitere Mittel zum Senden von Informationen an andere elektrische Komponenten über die Versorgungsleitungsstruktur und zum Empfangen von Informationen von anderen elektrischen Komponenten über die Versorgungsleitungsstruktur zumindest nach Ausfall des Datenbusses aufweist.

Gemäß einer vorteilhaften Weiterbildung der vorliegenden Erfindung wird vorgeschlagen, dass die Komponente Mittel zur Ausführung des erfindungsgemäßen Verfahrens aufweist.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein erfindungsgemäßes Bussystem gemäß einer bevorzugten Ausführungsform;
- Figur 2: ein Ablaufdiagramm eines erfindungsgemäßen Verfahrens gemäß einer ersten bevorzugten Ausführungsform;
- Figur 3: ein erfindungsgemäßes Verfahren gemäß einer zweiten bevorzugten Ausführungsform; und
- Figur 4: ein erfindungsgemäßes Verfahren gemäß einer dritten bevorzugten Ausführungsform.

### Beschreibung der Ausführungsbeispiele

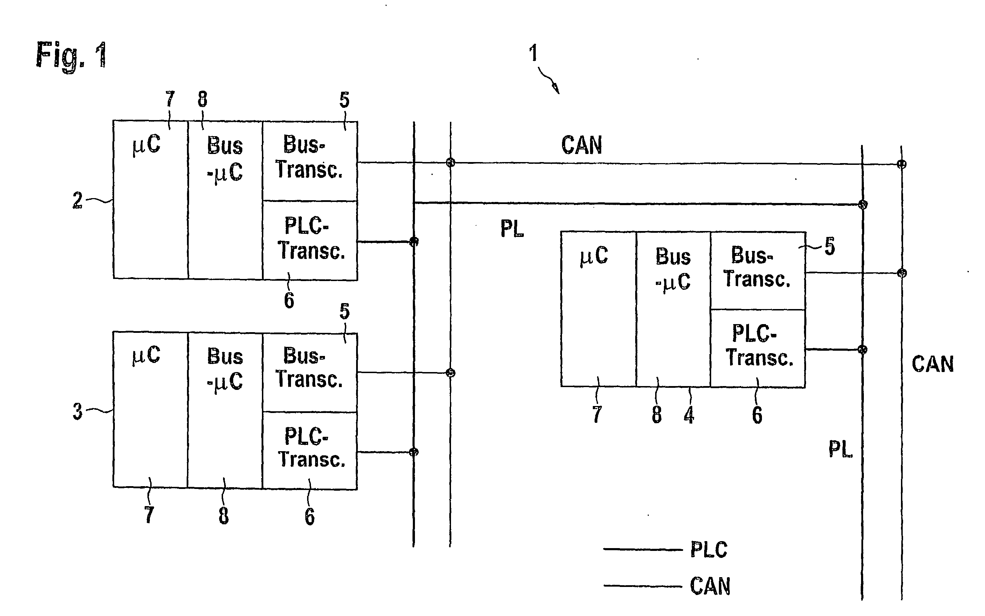

In Figur 1 ist ein erfindungsgemäßes Bussystem in seiner Gesamtheit mit dem Bezugszeichen 1 bezeichnet. Das Bussystem 1 dient zur Übertragung von Informationen zwischen elektrischen Komponenten 2, 3, 4 in einem Kraftfahrzeug. Die elektrischen Komponenten 2, 3, 4 sind bspw. Steuergeräte für beliebige Kraftfahrzeugfunktionen, insbesondere Steuergeräte in sicherheitsrelevanten Bereichen des Kraftfahrzeugs, wie bspw. einer Brennkraftmaschine, eines Triebsstrangs, eines Bremssystems oder beliebig anderer sog. X-by-wire-Anwendungen. Als elektrische Komponenten 2, 3, 4 im Sinne der vorliegenden Erfindung werden aber auch hydraulische oder pneumatische oder anderartige Komponenten bezeichnet, die elektrisch ansteuerbar sind.

Das Bussystem 1 umfasst einen standardisierten Datenbus, der für die Übertragung von Informationen bestimmt ist. Der Datenbus ist in dem vorliegenden Ausführungsbeispiel als ein Controller-Area-Network (CAN)-Bus ausgebildet und in Figur 1 durch eine Linie mit geringer Strichstärke dargestellt. Die elektrischen Komponenten 2, 3, 4 werden über eine Versorgungsleitungsstruktur PL mit Energie versorgt. Die Versorgungsleitungen PL sind in Figur 1 durch eine Linie mit großer Strichstärke repräsentiert. Erfindungsgemäß ist die Versorgungsleitungsstruktur PL als ein redundantes Kommunikationsnetz Teil des erfindungsgemäßen Bussystems 1. Die Informationen können somit nicht über den Datenbus CAN übertragen werden, sondern bei Bedarf auch über die Versorgungsleitungsstruktur PL. Die Übertragung von Informationen über Versorgungsleitungen PL wird auch als Powerline Communications (PLC) bezeichnet.

Die Kraftfahrzeugkomponenten 2, 3, 4 umfassen einen Bus-Transceiver 5 zum Senden von Informationen an andere elektrische Komponenten 2, 3, 4 über den Datenbus CAN und zum Empfangen von Informationen von anderen elektrischen Komponenten 2, 3, 4 über den Datenbus CAN. Außerdem weisen die Komponenten 2, 3, 4 jeweils einen PLC-Transceiver 6 zum Senden von Informationen an andere elektrische Komponenten 2, 3, 4 über die Versorgungsleitungsstruktur PL und zum Empfangen von Informationen von anderen elektrischen Komponenten 2, 3, 4 über die Versorgungsleitungsstruktur PL auf. Die Komponenten 2, 3, 4 umfassen außerdem ein Rechengerät 7, insbesondere einen Mikroprozessor, auf dem ein Steuerprogramm zur Ausführung der Steuerungs- oder Regelungsfunktion der Komponenten 2, 3, 4 ablauffähig ist.

Schließlich umfassen die Komponenten 2, 3, 4 ein weiteres Rechengerät 8 zur Steuerung der Informationsübertragung über die Transceiver 5 und 6. Das weitere Rechengerät 8 dient zur Entlastung des Rechengeräts 7.

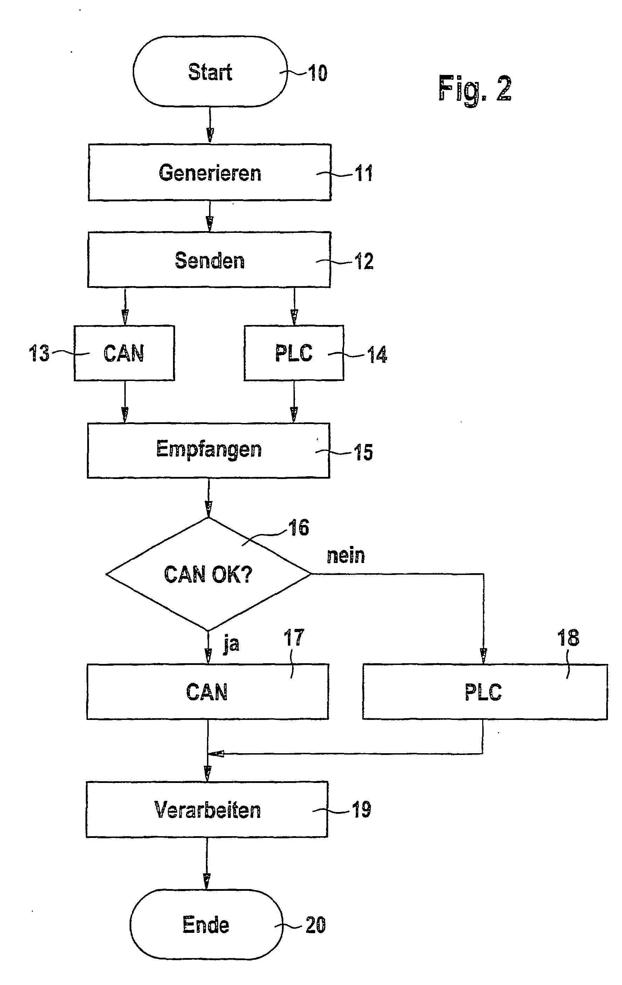

In Figur 2 ist ein erfindungsgemäßes Verfahren gemäß einer ersten bevorzugten Ausführungsform dargestellt. Das Verfahren beginnt in einem Funktionsblock 10. In einem Funktionsblock 11 werden Informationen generiert, die über das erfindungsgemäße Bussystem 1 übertragen werden sollen. In einem Funktionsblock 12 werden die generierten Informationen über das erfindungsgemäße Bussystem 1 gesendet und zwar sowohl über den Datenbus CAN (Funktionsblock 13) als auch über die Versorgungsleitungsstruktur PL (Funktionsblock 14). Die Funktionsblöcke 11 und 12 werden in einer Komponente 2, 3, 4 ausgeführt, die Informationen senden möchte.

In einem Funktionsblock 15 werden die über den Datenbus CAN und die über die Versorgungsleitungsstruktur PL übertragenen Informationen empfangen. Anschließend wird in einem Abfrageblock 16 überprüft, ob der Datenbus CAN in Ordnung ist. Falls ja, werden die über den Datenbus CAN empfangenen Informationen zur weiteren Verarbeitung herangezogen (Funktionsblock 17). Anderenfalls werden die über die Versorgungsleitungsstruktur PL übertragenen Informationen für die weitere Verarbeitung herangezogen (Funktionsblock 18). In einem Funktionsblock 19 werden dann die über den Datenbus CAN oder über die Versorgungsleitungsstruktur PL übertragenen Informationen verarbeitet. Die durch die Funktionsblöcke 15 bis 19 repräsentierten Verfahrensschritte werden in einer Komponente 2, 3, 4 ausgeführt, die Informationen empfängt. In einem Funktionsblock 20 ist das erfindungsgemäße Verfahren beendet.

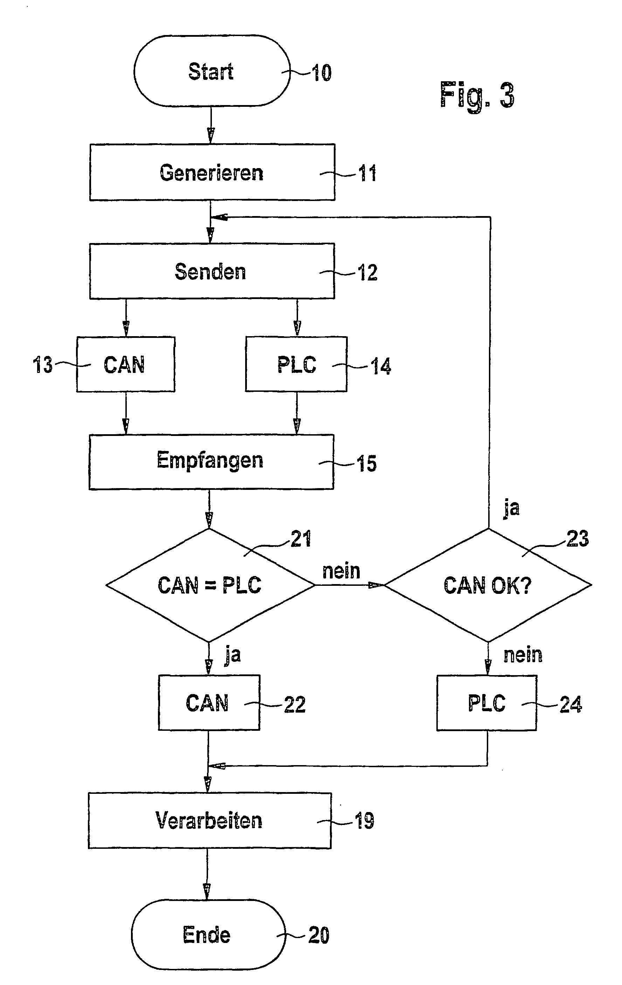

In Figur 3 ist eine weitere Ausführungsform eines erfindungsgemäßen Verfahrens dargestellt. Dabei werden wie bei dem Ausführungsbeispiel aus Figur 2 die generierten Informationen sowohl über den Datenbus CAN als auch über die Versorgungsleitungsstruktur PL übertragen und von der empfangenden Komponente 2, 3, 4 empfangen. In einem Abfrageblock 21 wird überprüft, ob die über den Datenbus CAN übertragenen Informationen mit den über die Versorgungsleitungsstruktur PL übertragenen Informationen identisch sind. Gemäß dieser Ausführungsform wird die Versorgungsleitungsstruktur PL zur Übertragung von Informationen für eine Plausibilitätsprüfung herangezogen. Falls die über den Datenbus CAN übertragenen Informationen gleich den über die Versorgungsleitungsstruktur PL übertragenen Informationen sind, kann davon ausgegangen werden, dass die Informationen fehlerfrei übertragen wurden. In einem Funktionsblock 22 werden die über den Datenbus CAN übertragenen Informationen zur weiteren Verarbeitung in der empfangenden elektrischen Komponente 2, 3, 4 herangezogen. Anderenfalls wird zu einem Abfrageblock 23 verzweigt, in dem überprüft wird, ob der Datenbus CAN in Ordnung ist. Falls ja, wird zu dem Funktionsblock 12 verzweigt, wo die generierten Informationen noch einmal übermittelt werden. Anderenfalls wird in einen Funktionsblock 24 verzweigt, in dem die über die Versorgungsleitungsstruktur PL übertragenen Informationen zur weiteren Verarbeitung herangezogen werden. Dann wird zu einem Funktionsblock 19 verzweigt, wo die empfangenen Informationen verarbeitet werden. In einem Funktionsblock 20 ist das erfindungsgemäße Verfahren beendet.

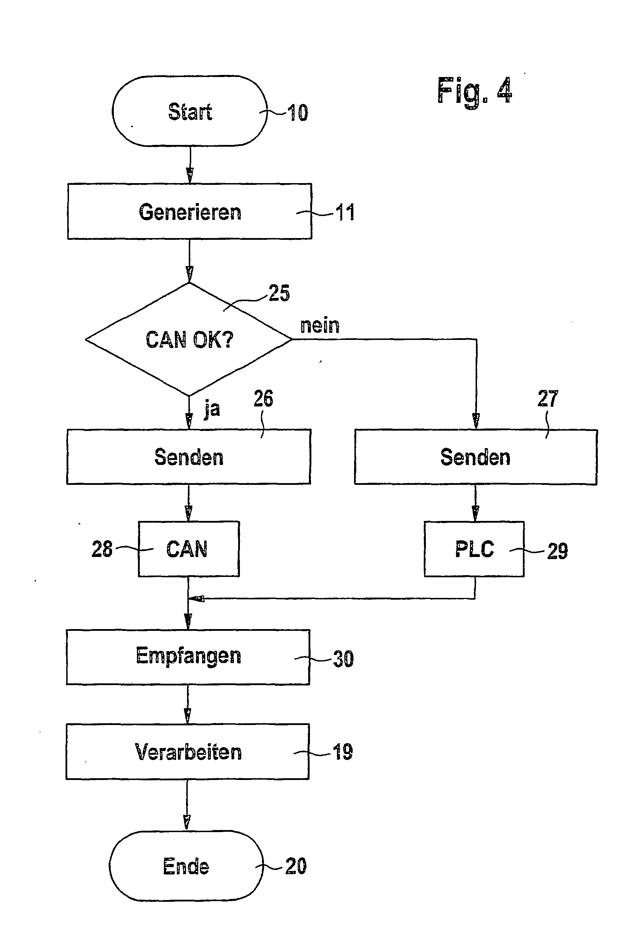

In Figur 4 ist ein drittes Ausführungsbeispiel eines erfindungsgemäßen Verfahrens dargestellt. Bei diesem Ausführungsbeispiel wird bereits vor dem Senden der generierten Informationen in einem Abfrageblock 25 überprüft, ob der Datenbus CAN in Ordnung ist. Falls ja, werden in einem Funktionsblock 26 die generierten Informationen über den Datenbus CAN (Funktionsblock 28) übertragen. Anderenfalls werden die generierten Informationen in einem Funktionsblock 27 über die Versorgungsleitungsstruktur PL (Funktionsblock 29) übertragen. In einem Funktionsblock 30 werden die entweder über den Datenbus CAN oder über die Versorgungsleitungsstruktur PL übertragenen Informationen empfangen.

Bei dieser Ausführungsform werden die Informationen im Normalfall über den Datenbus CAN übertragen. Während dieser Zeit kann die Versorungsleitungsstruktur PLC andere Kommunikationsaufgaben wahrnehmen und andere Informationen übermitteln. Bei Bedarf kann die Versorungsleitungsstruktur PLC dann zumindest einen Teil der bisher über den Datenbus CAN übertragenen Informationen übermitteln und einen Ausfall der empfangenden Komponente 2, 3, 4 oder gar des gesamten Kraftfahrzeugs abwenden. Wenn die Versorgungsleitungsstruktur PL die Informationsübertragung übernimmt, kann die bisher über die Versorgungsleitungsstruktur PL laufende Übertragung der anderen Informationen entweder unterbrochen oder aber fortgesetzt werden, sofern die Bandbreite der Versorgungsleitungsstruktur PL ausreicht.

## Patentansprüche

1. Verfahren zur Übertragung von Informationen zwischen elektrischen Komponenten (2, 3, 4) in einem Kraftfahrzeug, wobei die Informationen über einen Datenbus übertragen werden und zumindest einige der Komponenten (2, 3, 4) über eine Versorgungsleitungsstruktur mit Energie versorgt werden, **dadurch gekennzeichnet, dass** die Versorgungsleitungsstruktur von dem Datenbus getrennt ist und die Informationen redundant außer über den Datenbus zumindest nach Ausfall des Datenbusses auch über die Versorgungsleitungsstruktur übertragen werden.

2. Verfahren nach Anspruch 1, **dadurch gekennzeichnet, dass** die Informationen redundant über den Datenbus und über die Versorgungsleitungsstruktur übertragen werden.

3. Verfahren nach Anspruch 2, **dadurch gekennzeichnet, dass** die über die Versorgungsleitungsstruktur übertragenen Informationen bei einer funktionierenden Informationsübertragung über den Datenbus in einer empfangenden Komponente (2, 3, 4) nicht ausgewertet werden.

4. Verfahren nach Anspruch 2, **dadurch gekennzeichnet, dass** die über die Versorgungsleitungsstruktur übertragenen Informationen in einer empfangenden Komponente (2, 3, 4) mit den über den Datenbus übertragenen Informationen verglichen werden.

5. Verfahren nach Anspruch 1, **dadurch gekennzeichnet, dass** die Informationen bei einer funktionierenden Informationsübertragung über den Datenbus ausschließlich über den Datenbus übertragen werden und dass bei einer. fehlerhaften Informationsübertragung über den Datenbus die Informationen über die Versorgungsleitungsstruktur übertragen werden.

6. Verfahren nach Anspruch 5, **dadurch gekennzeichnet, dass** bei einer funktionierenden Informationsübertragung über den Datenbus andere Informationen über die Versorgungsleitungsstruktur übertragen werden.

7. Bussystem (1) zur Übertragung von Informationen zwischen elektrischen Komponenten (2, 3, 4) in einem Kraftfahrzeug, wobei das Bussystem (1) einen Datenbus und eine Versorgungsleitungsstruktur, an die zumindest einige der Komponenten (2, 3, 4) zur Energieversorgung der Komponenten (2, 3, 4) angeschlossen sind, umfasst, **dadurch gekennzeichnet, dass** die Versorgungsleitungsstruktur von dem Datenbus getrennt ausgebildet ist und das Bussystem (1) neben dem Datenbus auch die Versorgungsleitungsstruktur zur redundanten Übertragung von Informationen zumindest nach Ausfall des Datenbusses nutzt.

8. Bussystem (1) nach Anspruch 7, **dadurch gekennzeichnet, dass** der Datenbus als ein Controller-Area-Network (CAN)-Bus ausgebildet ist.

9. Bussystem (1) nach Anspruch 7 oder 8, **dadurch gekennzeichnet, dass** das Bussystem (1) Mittel zur Ausführung eines Verfahrens nach einem der Ansprüche 2 bis 6 aufweist.

10. Elektrische Komponente (2, 3, 4) eines Kraftfahrzeugs, mit Mitteln (5) zum Senden von Informationen an andere elektrische Komponenten (2, 3, 4) über einen Datenbus und zum Empfangen von Informationen von anderen elektrischen Komponenten (2, 3, 4) über den Datenbus, wobei die Komponente (2, 3, 4) und zumindest einige der anderen Komponenten (2, 3, 4) an eine Versorgungsleitungsstruktur zur Energieversorgung angeschlossen sind, **dadurch gekennzeichnet, dass** die Komponente (2, 3, 4) zur Realisierung einer redundanten Übertragung von Informationen weitere Mittel (6) zum Senden von Informationen an andere elektrische Komponenten (2, 3, 4) über die Versorgungsleitungsstruktur und zum Empfangen von Informationen von anderen elektrischen Komponenten (2, 3, 4) über die Versorgungsleitungsstruktur zumindest nach Ausfall des Datenbusses aufweist.

11. Kraftfahrzeugkomponente (2, 3, 4) nach Anspruch 10, **dadurch gekennzeichnet, dass** die Komponente (2, 3, 4) Mittel zur Ausführung eines Verfahrens nach einem der Ansprüche 2 bis 6 aufweist.

## Claims

1. Method for transmitting information between electrical components (2, 3, 4) in a motor vehicle, the information being transmitted via a databus, and at least some of the components (2, 3, 4) being supplied with energy via a supply line structure, **characterized in that** the supply line structure is separate from the databus and the information is transmitted redundantly not only via the databus but also via the supply line structure, at least after the databus fails.

2. Method according to Claim 1, **characterized in that** the information is transmitted redundantly via the databus and via the supply line structure.

3. Method according to Claim 2, **characterized in that** the information which is transmitted via the supply line structure is not evaluated in a receiving component (2, 3, 4) when the transmission of information via the databus is functioning.

4. Method according to Claim 2, **characterized in that** the information which is transmitted via the supply line structure is compared in a receiving component (2, 3, 4) with the information which is transmitted via the databus.

5. Method according to Claim 1, **characterized in that** when the transmission of information via the databus is functioning, the information is transmitted exclusively via the databus, and **in that** when the transmission of information via the databus is faulty the information is transmitted via the supply line structure.

6. Method according to Claim 5, **characterized in that** when the transmission of information via the databus is functioning, other information is transmitted via the supply line structure.

7. Bus system (1) for transmitting information between electrical components (2, 3, 4) in a motor vehicle, the bus system (1) comprising a databus and a supply line structure to which at least some of the components (2, 3, 4) for supplying energy to the components (2, 3, 4) are connected, **characterized in that** the supply line structure is embodied so as to be separate from the databus and the bus system (1) utilizes not only the databus but also the supply line structure for the redundant transmission of information at least after the databus fails.

8. Bus system (1) according to Claim 7, **characterized in that** the databus is embodied as a controller area network (CAN) bus.

9. Bus system (1) according to Claim 7 or 8, **characterized in that** the bus system (1) has means for carrying out a method according to one of Claims 2 to 6.

10. Electrical component (2, 3, 4) of a motor vehicle, having means (5) for transmitting information to other electrical components (2, 3, 4) via a databus, and for receiving information from other electrical components (2, 3, 4) via the databus, the component (2, 3, 4) and at least some of the other components (2, 3, 4) being connected to a supply line structure for the energy supply, **characterized in that**, in order to bring about redundant transmission of information, the component (2, 3, 4) has further means (6) for transmitting information to other electrical components (2, 3, 4) via the supply line structure, and for receiving information from other electrical components (2, 3, 4) via the supply line structure at least after the databus fails.

11. Motor vehicle component (2, 3, 4) according to Claim 10, **characterized in that** the component (2, 3, 4) has means for carrying out a method according to one of Claims 2 to 6.

## Revendications

1. Procédé de transmission d'informations entre des composants électriques (2, 3, 4) d'un véhicule, ces informations étant transmises par un bus de données et au moins quelques composants (2, 3, 4) sont alimentés en énergie par une structure de ligne d'alimentation,
**caractérisé en ce que**
la structure de ligne d'alimentation est distincte du bus de données et les informations sont transmises de manière redondante en dehors du bus de données au moins après la défaillance du bus de données mais également par la structure de ligne d'alimentation.

2. Procédé selon la revendication 1,
**caractérisé en ce que**
les informations sont transmises de manière redondante par le bus de données et par la structure de ligne d'alimentation.

3. Procédé selon la revendication 2,
**caractérisé en ce que**
les informations transmises par la structure de ligne d'alimentation ne sont pas exploitées dans un composant récepteur (2, 3, 4) si la transmission des informations par le bus de donnée fonctionne.

4. Procédé selon la revendication 2,
**caractérisé en ce que**
les informations transmises par la structure de ligne d'alimentation sont comparées aux informations transmises par le bus de données dans un composant récepteur (2, 3, 4).

5. Procédé selon la revendication 1,
**caractérisé en ce que**
les informations pour une transmission d'informations fonctionnant par le bus de données, sont uniquement transmises par le bus de données et en cas de transmission défectueuse d'informations par le bus de données, celles-ci sont alors transmises par la structure de ligne d'alimentation.

6. Procédé selon la revendication 5,
**caractérisé en ce que**
si la transmission d'informations par le bus de données fonctionne, d'autres informations sont transmises par la structure de ligne d'alimentation.

7. Système de bus (1) pour transmettre des informations entre les composants électriques (2, 3, 4) d'un véhicule selon lequel
le système de bus (1) comprend un bus de données et une structure de ligne d'alimentation à laquelle sont raccordés au moins certains des composants (2, 3, 4) pour l'alimentation en énergie des composants (2, 3, 4),
**caractérisé en ce que**
la structure de ligne d'alimentation est distincte du bus de données et le système de bus (1) utilise, également la structure de ligne d'alimentation, en plus du bus de données, pour transmettre de manière redondante des informations au moins après la défaillance du bus de données.

8. Système de bus (1) selon la revendication 7,
**caractérisé en ce que**
le bus de données est constitué par le bus du réseau local embarqué (bus CAN).

9. Système de bus (1) selon la revendication 7 ou 8,
**caractérisé en ce que**
le système de bus (1) comporte des moyens pour la mise en oeuvre d'un procédé selon l'une des revendications 2 à 6.

10. Composants électriques (2, 3, 4) d'un véhicule automobile comprenant des moyens (5) pour émettre des informations vers d'autres composants électriques (2, 3, 4) par un bus de données et pour recevoir des informations d'autres composants électriques (2, 3, 4) par le bus de données, les composants (2, 3, 4) et au moins certains des autres composants (2, 3, 4) étant raccordés à une structure de ligne d'alimentation pour l'alimentation en énergie,
**caractérisés en ce que**
pour réaliser une transmission redondante d'informations, les composants (2, 3, 4) comportent d'autres moyens (6) pour émettre des informations vers d'autres composants électriques (2, 3, 4) par la structure de ligne d'alimentation et pour recevoir des informations d'autres composants électriques (2, 3, 4) par la structure de ligne d'alimentation, au moins après la défaillance du bus de données.

11. Composants de véhicule (2, 3, 4) selon la revendication 10,
**caractérisés en ce que**
les composants (2, 3, 4) comportent des moyens pour la mise en oeuvre du procédé selon l'une des revendications 2 à 6.
